# EUROPÄISCHE PATENTSCHRIFT

(11) **EP 2 670 895 B1**
(45) Veröffentlichungstag und Bekanntmachung des Hinweises auf die Patenterteilung: **01.06.2016**
(21) Anmeldenummer: 12702755.5
(22) Anmeldetag: 26.01.2012
(51) Int. Cl.: D01C 1/02, D01B 1/48, C08J 5/04, D06M 15/227

(54) **VERFAHREN ZUR BEREITSTELLUNG UND AUFBEREITUNG VON NATURFASERN**
PROCESS FOR PROVIDING AND PROCESSING NATURAL FIBRES
PROCÉDÉ D'OBTENTION ET DE PRÉPARATION DE FIBRES NATURELLES

(30) Priorität: 02.02.2011 DE 102011010192
(43) Veröffentlichungstag der Anmeldung: 11.12.2013
(73) Patentinhaber: Biowert AG, 5001 Aarau (CH)
(72) Erfinder: GASS, Michael Ludwig, CH-4600 Olten (CH)
(74) Vertreter: Reiser & Partner
(86) Internationale Anmeldenummer: PCT/EP2012/000348
(87) Internationale Veröffentlichungsnummer: WO 2012/104040

(56) Entgegenhaltungen:
- WO-A1-00/40788
- WO-A1-2008/116340
- WO-A1-2009/003606
- WO-A1-2011/047804
- US-A- 3 694 308
- DATABASE WPI Week 200772 Thomson Scientific, London, GB; AN 2007-778065 XP002675173, & WO 2007/105878 A1 (CHAN O P) 20. September 2007 (2007-09-20)

## Beschreibung

Die Erfindung betrifft ein Verfahren zur Herstellung und Aufbereitung von Naturfasern.

Aus dem Stand der Technik ist es bekannt, einem Kunststoff wie Polyethylen Naturfasern wie Hanf-, Flachs- oder auch Holzfasern beizumischen. Derartige Naturfasern weisen den Vorteil der vollständigen biologischen Abbaubarkeit und des geringen spezifischen Gewichts auf. Bislang war jedoch nachteilig, dass ein mit Naturfasern versehenes Kunststoffmaterial gegenüber einem reinem Kunststoffmaterial oder gar einem mit Glasfasern verstärkten Kunststoff verschlechterte mechanische Eigenschaften aufwies. Daher wurden Naturfasern bislang vorwiegend als Füllstoff betrachtet, lediglich eingesetzt, um den Anteil des nicht-organischen Materials zu reduzieren. Darüber hinaus war der Einsatzbereich aufgrund der schlechten mechanischen Eigenschaften derartiger Compounds begrenzt. Ein Haupteinsatzgebiet der herkömmlichen mit Naturfasern versehenen Kunststoffmaterialien liegt im Automobilbau wo beispielsweise Verkleidungen im Innenbereich eines Kraftfahrzeugs aus derartigen Materialien hergestellt werden.

Grundsätzlich können verschiedene Formen von Naturfasern unterschieden werden:
- Holzfasern bestehen aus langgestreckten Holzzellen, wobei Holzfasern je nach Holzsorte etwa ein Fünftel Lignin und vier Fünfteln Zellulose enthalten.
- Bastfasern bestehen aus mehrzelligen Faserbündeln. Es sind lang gezogene und dickwandige Zellen, die unverholzt sind. Der Hauptbestandteil von Bastfasern sind im Wesentlichen unterschiedlich dicke Schichten von lang gestreckten Zellulosefibrillen, die von Hemi-Zellulose umschlossen sind. Typische Naturfasern auf der Basis von Bastfasern sind beispielsweise Hanffasern
- Naturfasern aus Grünschnitt, insbesondere aus Grasschnitt oder Roggenschnitt bestehen vorwiegend aus Hartfasern, welche im Wesentlichen ebenfalls auf Zellulose basieren. Hartfasern weisen meist eine höhere Härte auf als Bastfasern, jedoch sind die Hartfasern empfindlicher gegenüber Biegebeanspruchung.

Der Erfindung liegt die Aufgabe zugrunde, ein Verfahren zur Herstellung von Naturfasern anzugeben, welche die Herstellung von mechanisch belastbaren und haltbaren Naturfasern ermöglicht.

Diese Aufgabe wird mit den Merkmalen von Anspruch 1 gelöst. Auf vorteilhaften Ausgestaltungen nehmen die Unteransprüche Bezug.

Das erfindungsgemäße Verfahren zur Bereitstellung und Aufbereitung von Naturfasern umfasst folgende Schritte:
1) Bereitstellen einer Naturfasern enthaltenden Biomasse mit einer Trockensubstanz von höchstens 50 Gew.%;
2) Zugeben von Wasser zum Herstellen einer die Biomasse enthaltenden Suspension;
3) Herauslösen der Naturfasern aus der Biomasse;
4) Abtrennen der Flüssigkeit aus der Suspension;
5) wenigstens einmalige Wiederholung der Schritte 2) bis 4), wobei bei der letztmaligen Wiederholung der Schritte 2) bis 4) die Suspension wenigstens ein Mittel zum Ausrüsten der Naturfasern enthält;
6) Trocknen der Naturfasern.

In Schritt 1 wird eine Naturfasern enthaltende Biomasse bereitgestellt. Hierbei kann es sich um Naturfasern enthaltende Pflanzenteile von verschiedenen Pflanzen handeln. Besonders geeignet für das beschriebene Verfahren sind Pflanzenteile, welche nicht verholzt sind und daher nur geringe Mengen oder kein Lignin, insbesondere weniger als 5 Gew.% Lignin enthalten. Vorteilhaft sind weiterhin Pflanzenteile, die in nur geringem Maß oder gar nicht verhornt sind. Eine Verhornung wird bei Pflanzenfasern in der Regel durch eine Trocknung ausgelöst. Dabei bilden sich aufgrund des Wasserentzugs zwischen den Zellulosemolekülen kovalente Bindungen aus, wodurch die Pflanzenfasern verspröden und die Bruchneigung zunimmt. Daher wird vorgeschlagen, solche Pflanzenteile zu verwenden, die nicht getrocknet wurden.

Für das erfindungsgemäße Verfahren eignen sich einerseits frisch geschnittenes Gras und andererseits siliertes Gras besonders. Auf diese Weise werden als Ausgangsmaterial Faserqualitäten bereitgestellt, deren Trockensubstanzgehalte zwischen 25 und 40 Gew.% liegen. Trockensubstanzgehalt bezeichnet dabei den Gehalt an trockener Substanz, der zurückbleibt, wenn sämtliches Wasser entfernt wird. Ein Gehalt an Trockensubstanz von 25 bis 40 Gew.% entspricht daher im Umkehrschluss einem Wassergehalt zwischen 75 und 60 Gew.%. Die Silierung hat darüber hinaus den Vorteil, dass das nur zu bestimmten Jahreszeiten zur Verfügung stehende Gras über das ganze Jahr ohne Qualitätsverlust verarbeitet werden kann. Ein weiterer geeigneter Stoff ist Roggengrünschnitt, wobei je nach Region verfügbare andere nachwachsende faserhaltige Rohstoffe eingesetzt werden können. Diese sollten jedoch durch einen geringen Gehalt an Lignin aufweisen und vorwiegend aus Hartfasern bestehen.

In Schritt 2 wird durch Zugabe von Wasser eine die Biomasse enthaltene Suspension hergestellt. Dazu wird die Biomasse beispielsweise in einen Mischtank gegeben, Wasser hinzugegeben und mittels einem in dem Mischtank angeordneten Rührwerk in Suspension gebracht. Diese Suspension erleichtert die weitere Behandlung der Biomasse. Bei dem erfindungsgemäßen Verfahren erfolgt die Herstellung der Suspension ausschließlich mit Wasser, dieses bildet in den nachfolgenden Schritten auch das Lösungsmittel, welches die löslichen Bestandteile der Biomasse aufnimmt. In diesem Schritt erfolgt auch eine erste Reinigung der Biomasse, wobei an der Biomasse anhaftende Verunreinigungen und unerwünschte Begleitstoffe in dem Wasser gelöst werden. In diesem Zusammenhang ist insbesondere vorteilhaft, dass das Freisetzen der Naturfasern aus der Biomasse ohne Einsatz möglicherweise umweltgefährdender Chemikalien erfolgt. Lösungsmittel ist ausschließlich Wasser.

In Schritt 3 werden die Naturfasern aus der Biomasse herausgelöst. Zum Herauslösen wird vorzugsweise ein Mazerator eingesetzt, welcher die dem Mazerator zugeführte suspendierte Biomasse in einzelne Bestandteile auftrennt und aufgrund der erzeugten Friktion die mit Zellflüssigkeit gefüllten Zellen öffnet und den Zellsaft austreten lässt. Dazu weist ein Mazerator ein rotierendes Schneidmesser auf, welches mit oder ohne Berührung an einem Gegenmesser entlangstreift. Das Gegenmesser kann auch als Sieb ausgebildet sein. Das Ergebnis der Mazeration ist eine Suspension, in der die in der Biomasse enthaltenen Naturfasern vereinzelt sind und die in der Biomasse enthaltenen flüssigen Bestandteile in der wässrigen Suspension in Lösung gehen.

Die herausgelösten vereinzelten Naturfasern bestehen im Wesentlichen aus Alpha-Zellulose und Hemi-Zellulose, wobei das Verhältnis zwischen diesen beiden Zellulosearten von dem Schnittzeitpunkt der Biomasse abhängig ist. Zur Verwendung der Naturfasern als Verstärkungsfaser in einem Kunststoff-Compound sind beide Zellulosearten relevant: die Alpha-Zellulose ermöglicht eine hohe mechanische Stabilität der Fasern und die Hemi-Zellulose ermöglicht eine gleichmäßige Aufnahme des Ausrüstungsmittels, beispielsweise des Haftvermittlers oder des Flammschutzmittels. Ferner verbessert Hemi-Zellulose die Verarbeitbarkeit des Kunststoff-Compounds, insbesondere dessen Fließfähigkeit bei einer thermoplastischen Verarbeitung. Bevorzugte Mengenanteile von Alpha-Zellulose und Hemi-Zellulose betragen, jeweils bezogen auf die Gesamtmasse 20 bis 30 Gew.% Alpha-Zellulose und 15 bis 25 Gew.% Hemi-Zellulose, besonders bevorzugt enthält die faserhaltige Biomasse 25 Gew.% Alpha-Zellulose und 15 Gew.% Hemi-Zellulose. Insgesamt soll der Mengenanteil der Alpha-Zellulose größer sein als der Mengenanteil der Hemi-Zellulose.

In Schritt 4 erfolgt eine Abtrennung der Flüssigkeit aus der Suspension. Dazu wird die Suspension einer Presse, vorzugsweise einer Schneckenpresse zugeführt. In der Presse erfolgt eine Abtrennung der Flüssigkeit mit den in der Flüssigkeit gelösten Bestandteilen wie Zellwasser, Kohlenhydraten, Proteinen und Verunreinigungen von dem in der Biomasse enthaltenen Feststoff, wobei der Feststoff insbesondere die Naturfasern beinhaltet.

In Schritt 5 wird wenigstens einer der Schritte 2 bis 4 wenigstens einmal, bevorzugt zweimal wiederholt. Dabei wird zur Herstellung der Suspension jeweils aufgereinigtes Wasser verwendet. Durch die Wiederholung der Schritte 2 bis 4, welche auch als Aufreinigungsprozess bezeichnet werden können, ergibt sich eine besonders hohe Reinheit der Naturfasern. Diese hohe Reinheit der Naturfasern ist gekennzeichnet durch einen besonders geringen Gehalt der Naturfasern an Kohlenhydraten und Proteinen. Bei Versuchen hat sich gezeigt, dass an den Naturfasern anhaftende oder mit den Naturfasern fest verbundene Verunreinigungen, die insbesondere aus Kohlenhydraten und Proteinen gebildet werden, die Fixierbarkeit eines Mittels zum Ausrüsten an den Naturfasern verschlechtern. Insgesamt hat sich gezeigt, dass die Fixierbarkeit der Ausrüstungsmittel umso besser, je größer der Reinheitsgrad der aus Zellulose-Verbindungen bestehenden Naturfaser ist. Ferner sind Naturfasern mit einer hohen Reinheit auch ohne zusätzliche Ausrüstung besonders haltbar, was insbesondere bei der Verwendung der Naturfasern als Dämmstoff von Vorteil ist.

Der Reinheitsgrad einer Naturfaser kann durch den Grad der Anfärbbarkeit quantifiziert werden. Dazu werden Naturfasern mit einem Farbstoff gefärbt und anschließend untersucht, auf welche Art und Weise sich der Farbstoff in den Naturfasern ein- oder angelagert hat.

Bei der letztmaligen Wiederholung der Schritte 2 bis 4 wird der Suspension ein Mittel zum Ausrüsten der Naturfasern beigegeben. Ferner ist denkbar, der Suspension eine Kombination verschiedener Mittel beizugeben. Das Ausrüstungsmittel lagert sich aus der Suspension, also aus der Nassphase, an den Naturfasern an. Dabei ist insbesondere vorteilhaft, dass die Naturfasern bislang feucht gehalten wurden und noch keine Verhornung der Fasern erfolgt ist. Somit sind noch keine oder nur wenige kovalente Bindungen zwischen den Zellulosemolekülen entstanden, welche die Erreichbarkeit der Zellulosemoleküle erschweren und eine Anlagerung des Ausrüstungsmittels an den Naturfasern unterbinden können. Aufgrund der Behandlung der Naturfasern in der Nassphase dringt das Mittel in die Matrix der Naturfasern ein und ist nach abschließender Trocknung fest an den Naturfasern angebunden. Als Mittel zum Ausrüsten kommen verschiedenste Zusätze in Frage, die den Naturfasern besondere Eigenschaften, beispielsweise erhöhte mechanische Festigkeitswerte, besondere Farbgestaltung, Lichtechtheit, verbessertes Haftverhalten oder reduzierte Entflammbarkeit verleihen.

In Schritt 6 erfolgt eine Trocknung der Naturfasern. Bei dem erfindungsgemäßen Verfahren ist dies die erste Trocknung der Naturfasern, welche bis zu diesem Zeitpunkt stets feucht gehalten wurden. Die Trocknung wird hinsichtlich der Trocknungstemperatur und der Trocknungsdauer dabei derart ausgeführt, dass die Naturfasern nicht beschädigt werden und eine Verhornung weitgehend verhindert wird. Ferner erfolgt die Trocknung derart, dass eine ausreichende Menge an Restfeuchte in den Naturfasern enthalten bleibt, so dass auch nach Abschluss der Trocknung keine Verhornung der Naturfasern erfolgt. In diesem Zusammenhang ist ein Gehalt an Trockensubstanz nach Abschluss der Trocknung von 88 bis 92 Gew.%, höchstens von 95 Gew.% besonders vorteilhaft. Diese Werte entsprechen anders ausgedrückt einer Restfeuchte von 5 Gew.% bzw. von 8 bis 12 Gew.%. Dadurch behalten die Naturfasern ihre Geschmeidigkeit, was sich positiv auf die mechanische Stabilität bei der späteren Verwendung der Naturfasern, beispielsweise als Faserverstärkung in einem Kunststoffmaterial auswirkt.

Die Trocknung erfolgt vorzugsweise in einem mehrstufigen Verfahren. Ein besonders vorteilhaftes Trocknungsverfahren umfasst eine zweistufige Trocknung.

In einer ersten Stufe, der Vortrocknung erfolgt dabei eine Trocknung in einem Bandtrockner. Eine vorteilhafte Trocknung der ersten Stufe erfolgt bei Warmlufttemperaturen von 60 bis 80°C und einer Verweilzeit von 25 bis 35 Minuten. Die Temperatur ist dabei so gewählt, dass eine Verhornung der Naturfasern weitgehend verhindert ist. Ferner wird eine zu starke lokale Trocknung der den Luftstrom zugewandten Naturfasern verhindert.

In einer zweiten Stufe, der Endtrocknung werden die Naturfasern in einem Luftstrom getrocknet, wobei die Naturfasern direkt einem erhitzten Luftstrom ausgesetzt und mit diesem mitgeführt werden. Dazu wird vorzugsweise ein Flugschichttrockner verwendet bei dem die Naturfasern und der Luftstrom im Gleichstrom durch den Flugschichttrockner geführt werden. Die Lufttemperatur des erhitzten Luftstroms beträgt vorzugsweise zwischen 75°C und 110°C und die Verweilzeit der Naturfasern beträgt 0,5 bis 3 s.

Durch das Mittel zum Ausrüsten wird die Naturfaser zu einer funktionalen Naturfaser ausgerüstet, welche je nach Anforderung und Einsatzzweck besondere technische Eigenschaften aufweist. Zur besseren Verbindbarkeit mit Kunststoffen, insbesondere thermoplastischen Kunststoffen kann das Mittel einen Haftvermittler umfassen. Dieser kann ein carboxyliertes Polypropylen umfassen, wobei zur Carboxylierung insbesondere Maleinsäureanhydrid verwendet wird. Derartige Haftvermittler verbessern die Anhaftung der Kunststoffmoleküle, insbesondere von Polypropylen an die Naturfasern, wodurch sich ein faserverstärktes Kunststoffmaterial mit verbesserten mechanischen Eigenschaften ergibt. Bei dem bevorzugten Verfahren erfolgt die Ausrüstung mit dem Haftvermittler in wässriger Phase. Der Haftvermittler kann in dem Wasser gelöst oder suspendiert bereitgestellt werden. Auf diese Weise wird der Haftvermittler in den Fasern aufgenommen oder an diesen angelagert. Die Ausrüstung mit dem Haftvermittler kann auf diese Weise genauso einfach erfolgen wie ein Färbeprozess.

Vorteilhaft ist bei dem erfindungsgemäßen Verfahren, wenn die im feuchten Zustand bereitgestellten Naturfasern vor dem ersten Trocknen unter Zugabe von Wasser aufgeschlossen und dann mit dem Haftvermittler ausgerüstet werden. Auf diese Weise wird eine gute Aufnahme des Haftvermittlers in die Naturfasern erreicht. Eine Trocknung vor der Ausrüstung würde hingegen zu einer Verhornung der Naturfasern führen. Hierdurch würden nicht nur die mechanischen Eigenschaften der Naturfasern beeinträchtigt, sondern auch die Aufnahme mit dem Haftvermittler erschwert.

Die Naturfasern weisen einen Gehalt an Haftvermittler von 0,5 Gew.% bis 5 Gew.% auf, vorteilhafterweise beträgt der Gehalt an Haftvermittler zwischen 1 Gew.% und 3,5 Gew.%, wobei ein Gehalt an Haftvermittler von 1,25 Gew.% bis 2,5 Gew.% besonders bevorzugt werden.

Zur Herabsenkung der Entflammbarkeit von Naturfasern in Dämmstoffen oder eines faserverstärkten Kunststoffartikels kann das Mittel ein Flammschutzmittel, insbesondere auf der Basis von Bor umfassen.

Zur Verbesserung der Stabilität der Naturfasern, insbesondere von eingefärbten Naturfasern gegenüber UV-Strahlung kann das Mittel zum Ausrüsten einen Lichtstabilisator umfassen. Ein Farbstoff ermöglicht die Färbung der Naturfasern, wobei der Farbstoff besonders gut an den erfindungsgemäßen Naturfasern anhaftet und sich dadurch eine durchgehende Färbung der Naturfasern ergibt.

Die Naturfasern enthaltende Biomasse kann Grasschnitt und/oder Roggengrünschnitt enthalten. Grasschnitt und Roggengrünschnitt ist durch einen besonders geringen Gehalt an Lignin gekennzeichnet. Die Naturfasern dieser Stoffe bestehen vorwiegend aus Alpha- und Hemizellulose. Generell wird als Rohstoff eine faserhaltige Biomasse mit geringem Ligningehalt, insbesondere einem Ligningehalt von weniger als 5 Gew.%, vorgeschlagen. Vor diesem Hintergrund sind weitere denkbare Rohstoffe Bargasse, insbesondere silierter Zuckerrohrabfall und Treber, insbesondere spelzenhaltiger Biertreber vorteilhaft. Diese durch das erfindungsgemäß Verfahren aufbereiteten Naturfasern liegen in einer besonders hohen Reinheit vor, so dass diese Naturfasern, mit einem Haftvermittler versehen, als Faserverstärkung in Kunststoffen zu einer signifikanten Verbesserung der mechanischen Eigenschaften des Kunststoffs führen. Dies ist insofern überraschend, als dass die vorwiegend aus Hartfasern bestehenden Grasfasern und Roggenfasern eine geringere Festigkeit erwarten ließen als beispielsweise auf Bastfasern basierende Hanffasern. In Versuchen hat sich jedoch überraschenderweise gezeigt, dass die Zugfestigkeit eines mit Gras- oder Roggenfasern verstärkten Probekörpers aus thermoplastischem Kunststoff besser ist als die ein mit Hanffasern verstärkten Probekörpers aus thermoplastischem Kunststoff.

Ein erfindungsgemäßes faserverstärktes Kunststoffmaterial umfasst einen Kunststoff, insbesondere einen thermoplastischen Kunststoff und Naturfasern erhältlich nach dem erfindungsgemäßen Verfahren. Wie zuvor beschrieben weist ein derartig mit Naturfasern faserverstärkter Kunststoff überraschend gute mechanische Eigenschaften auf. Ferner kann das mit den Naturfasern versehene Kunststoffmaterial auf herkömmlichen Anlagen zur Kunststoffverarbeitung verarbeitet werden, insbesondere kann das mit den Naturfasern versehene Kunststoffmaterial in herkömmlichen Spritzgieß- und Extrusionsanlagen verarbeitet werden.

Ein erfindungsgemäßes Dämmmaterial umfasst Naturfasern erhältlich nach dem erfindungsgemäßen Verfahren. Ein derartiges Dämmmaterial besteht aus natürlichen und biologisch abbaubaren Rohstoffen, wobei die Entflammbarkeit durch Zusatz eines Flammschutzmittels reduziert ist.

Die mit dem erfindungsgemäßen Verfahren hergestellten Naturfasern finden ferner vorteilhafte Verwendung als Zuschlag für Baustoffe, als Materialien für Garten- und Landschaftsbau und als Verpackungsmaterial.

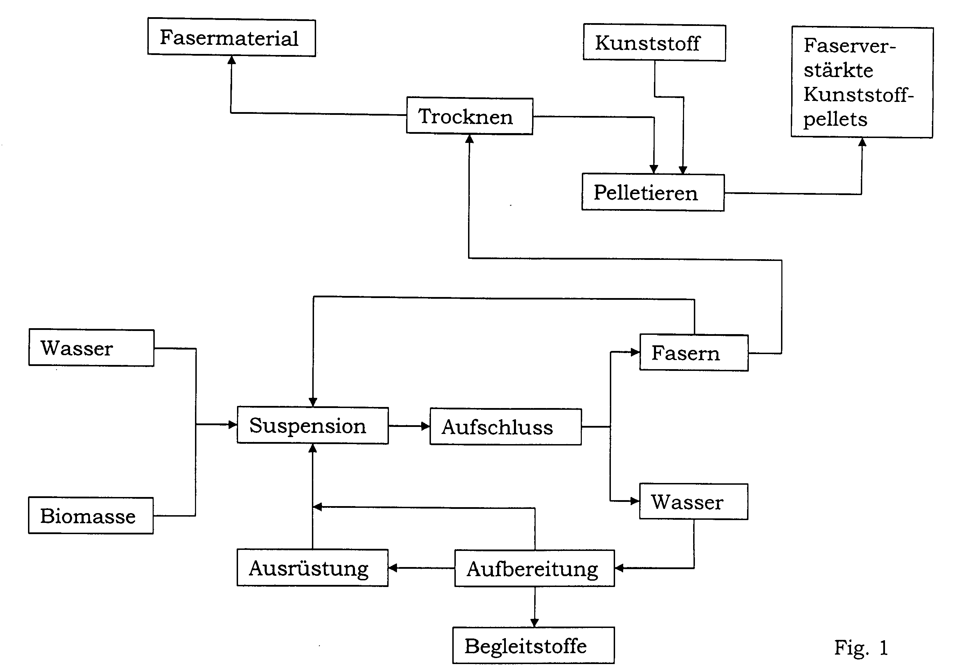

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und / oder bildlich dargestellten Merkmale für sich oder in beliebiger Kombination den Gegenstand der Erfindung, unabhängig von der Zusammenfassung in einzelnen Ansprüchen oder deren Rückbeziehung.

Die Figur illustriert schematisch ein Verfahren zur Bereitstellung und Aufbereitung von Naturfasern.

In Schritt 1 wird eine Naturfasern enthaltende Biomasse bereitgestellt. Hierbei kann es sich um Naturfasern enthaltende Pflanzenteile von verschiedenen Pflanzen handeln. Besonders geeignet für das beschriebene Verfahren sind Pflanzenteile, welche nicht verholzt sind und daher nur geringe Mengen oder kein Lignin enthalten. Vorteilhaft sind weiterhin Pflanzenteile, die in nur geringem Maß oder gar nicht verhornt sind. Eine Verhornung wird bei Pflanzenfasern in der Regel durch eine Trocknung ausgelöst. Daher wird vorgeschlagen, solche Pflanzenteile zu verwenden, die nicht getrocknet wurden. Für das erfindungsgemäße Verfahren eignen sich frisch geschnittenes Gras oder siliertes Gras besonders. Auf diese Weise eine Biomasse bereitgestellt, dessen Trockensubstanzgehalt zwischen 25 und 40 Gew.% liegt. Trockensubstanzgehalt bezeichnet dabei den Gehalt an trockener Substanz, der zurückbleibt, wenn sämtliches Wasser entfernt wird. Ein Gehalt an Trockensubstanz von 25 bis 40 Gew.% entspricht daher einem Wassergehalt zwischen 75 und 60 Gew.%. Die Silierung hat den Vorteil, dass das nur zu bestimmten Jahreszeiten zur Verfügung stehende Gras über das ganze Jahr ohne Qualitätsverlust verarbeitet werden kann. Ein weiterer geeigneter Stoff ist Roggengrünschnitt, wobei auch je nach Region verfügbare andere nachwachsende faserhaltige Rohstoffe eingesetzt werden können.

In Schritt 2 wird durch Zugabe von Wasser eine die Biomasse enthaltene Suspension hergestellt. Dazu wird die Biomasse in einen Mischtank gegeben, Wasser hinzugegeben und mittels einem in dem Mischtank angeordneten Rührwerk mit Wasser in Suspension gebracht. In diesem Schritt erfolgt auch eine erste Reinigung der Biomasse, wobei an der Biomasse anhaftende Verunreinigungen und unerwünschte Begleitstoffe in dem Wasser gelöst werden.

In Schritt 3 werden die Naturfasern aus der Biomasse herausgelöst. Zum Herauslösen wird ein Mazerator eingesetzt, welcher die dem Mazerator zugeführte suspendierte Biomasse in einzelne Bestandteile auftrennt und aufgrund der erzeugten Friktion die mit Zellflüssigkeit gefüllten Zellen öffnet und den Zellsaft austreten lässt. Dazu weist ein Mazerator ein rotierendes Schneidmesser auf, welches berührungslos an einem als Sieb ausgebildeten Gegenmesser entlangstreift. Das Ergebnis der Mazeration ist eine Suspension, in der die in der Biomasse enthaltenen Naturfasern vereinzelt sind und die in der Biomasse enthaltenen flüssigen Bestandteile in der wässrigen Suspension in Lösung gehen.

Die vereinzelten Naturfasern bestehen im Wesentlichen aus Alpha-Zellulose und Hemi-Zellulose, wobei die Naturfasern 25 Gew.% Alpha-Zellulose und 15 Gew.% Hemi-Zellulose enthalten.

In Schritt 4 erfolgt eine Abtrennung der Flüssigkeit aus der Suspension. Dazu wird die Suspension einer Schneckenpresse zugeführt. In der Schneckenpresse erfolgt eine Abtrennung des Wassers mit den in dem Wasser gelösten Bestandteilen wie Zellwasser, Kohlenhydraten, Proteinen und Verunreinigungen von den in der Biomasse enthaltenen Naturfasern.

Die zuvor beschriebenen Schritte 2) bis 4) werden zweimal wiederholt. Dabei wird zur Herstellung der Suspension jeweils aufgereinigtes Wasser verwendet, was bedeutet, dass Wasser ohne die zuvor gelösten Bestandteile bereitgestellt wird. Durch die Wiederholung der Schritte 2 bis 4, welche auch als Aufreinigungsprozess bezeichnet werden, ergibt sich eine besonders hohe Reinheit der Naturfasern. Bei der letztmaligen, also zweiten Wiederholung der Schritte 2) bis 4) wird dem aufgereinigten Wasser ein Mittel zum Ausrüsten der Naturfasern zugemischt. Dieses Mittel ist dann in der wässrigen Suspension gelöst und lagert sich an den Naturfasern in der Nassphase an.

Die Reinheit der Naturfasern wird durch einen Färbetest nachgewiesen. Dazu wird zunächst 0,5 g Direktfarbstoff in Wasser mit einer Temperatur von 40°C gelöst. Anschließend wird der Lösung 2 g Glaubersalz (NaSO₄) zugemischt und die Lösung wird auf 60°C erhitzt. Anschließend werden Naturfasern beigegeben, welche nach der ersten Trocknung entnommen sind und einen Gehalt an Trockensubstanz von 60 bis 65 Gew.% aufweisen. Das so entstandene Gemisch wird unter Rühren auf 70°C erhitzt und unter Rühren 30 min. auf 70°C gehalten. Anschließend werden die Naturfasern mit einer Handpresse abgepresst, mehrfach mit Wasser gespült und an der Luft getrocknet. Die Analyse der Naturfasern erfolgt mittels eines Mikroskops. Verwendete Farbstoffe sind Columbiaechtschwarz BV 150% der CBW Chemie GmbH Wolfen, Solaminlichtgelb 5G 167% der CBW Chemie GmbH Wolfen, Solaminlichtscharlach FB 200% der CBW Chemie GmbH Wolfen, DyStar Remazol Yellow RR Gran der DyStar Colours Distribution GmbH Frankfurt am Main, DyStar Levafix Brilliant Red CA der DyStar Colours Distribution GmbH Frankfurt am Main sowie DyStar Remazol Red CA Gran der DyStar Colours Distribution GmbH Frankfurt am Main. Die mit dem Mikroskop untersuchten Naturfasern sind gekennzeichnet durch eine nahezu durchgängige Färbung, es sind nur geringe Fehlstellen vorhanden. Ausgehend von der durch das Mikroskop sichtbaren Fläche einer Naturfaser beträgt der Flächenanteil der Fehlstellen einer Naturfaser höchstens 5%.

Ein weiterer Nachweis zur Reinheit der Naturfasern ist durch die Bestimmung des chemischen Sauerstoffbedarfs gegeben. Der chemische Sauerstoffbedarf ist ein Maß für die Summe aller im Wasser vorhandenen, unter bestimmten Bedingungen oxidierbaren Stoffe. Der chemische Sauerstoffbedarf gibt die Menge an Sauerstoff in mg/l an, die zu ihrer Oxidation benötigt würde, wenn Sauerstoff das Oxidationsmittel wäre. Die Bestimmung des chemischen Sauerstoffbedarfs wird anhand einer Probe vorgenommen, die aus der wässrigen Phase der abschließend hergestellten Suspension aus Wasser und Biomasse entnommen wird. Nach Abtrennung der Naturfasern enthält diese wässrige Phase einen Gehalt an Trockensubstanz von weniger als 1 Gew.%, vorzugsweise weniger als 0,5 Gew.% und besonders bevorzugt von weniger als 0,25 Gew.% Trockensubstanz auf. Der chemische Sauerstoffbedarf der Probe beträgt weniger als 5.000 mg/l, vorzugsweise weniger als 2.000 mg/l. Das Mittel zum Ausrüsten enthält zur besseren Verbindbarkeit mit thermoplastischen Kunststoffen einen Haftvermittler auf der Basis eines mit Maleinsäureanhydrid carboxylierten Polypropylens. Zur Herabsenkung der Entflammbarkeit der Naturfasern enthält das Mittel ferner ein Flammschutzmittel basierend auf Bor. Falls eine Verwendung der Naturfasern in UV-Licht ausgesetzten Bereichen vorgesehen ist, kann das Mittel zusätzlich mit einem Lichtstabilisator versehen sein und ein Farbstoff ermöglicht die durchgehende Färbung der Naturfasern.

In Schritt 5 erfolgt eine Trocknung der Naturfasern. Bei dem erfindungsgemäßen Verfahren ist dies die erste Trocknung der Naturfasern, welche bis zu diesem Zeitpunkt stets feucht gehalten wurden. Zur Vermeidung der Verhornung wird die Trocknung derart durchgeführt, dass die Naturfasern nach Abschluss der Trocknung einen Gehalt an Trockensubstanz von 88 bis 92 Gew.%, höchstens von 95 Gew.% aufweisen.

Die Trocknung erfolgt in einem zweistufigen Verfahren. In einer ersten Stufe, der Vortrocknung erfolgt eine Trocknung in einem Bandtrockner bei Warmlufttemperaturen von 60 bis 80°C und einer Verweilzeit der Naturfasern in dem Bandtrockner von 25 bis 35 min. Damit die Naturfasern dennoch eine gleichmäßige Restfeuchte aufweisen, ist der Bandtrockner so ausgestaltet, dass nur ein Teil der getrockneten Naturfasern entnommen wird, während der übrige Teil dem Bandtrockner für eine wiederholte Trocknung wieder zugeführt wird. Dazu wird der Teil der Naturfasern zurückgeführt, der während der Trocknung dem Luftstrom abgewandt war und dadurch die größte Restfeuchte aufweist. Dementsprechend wird lediglich der Teil der Naturfasern entnommen, der eine gleichmäßig geringe Restfeuchte aufweist. Die Trocknungsparameter während der Trocknung in der ersten Stufe sind dabei so eingestellt, dass die Naturfasern nach der ersten Trocknung eine Restfeuchte von 20 bis 40 Gew.%, höchstens von 50 Gew.% aufweisen.

In einer zweiten Stufe, der Endtrocknung werden die Naturfasern in einen Luftstrom aus erhitzter Luft gegeben und im Gleichstrom mit der erhitzten Luft geführt, wobei die Naturfasern Feuchtigkeit an die im Gleichstrom geführte Luft abgeben. Für diese Trocknung wird ein Flugschichttrockner eingesetzt. In diesem Trockner werden die Naturfasern in dem Luftstrom mitgerissen und in kurzer Zeit getrocknet. Die Lufttemperatur des erhitzten Luftstroms beträgt vorzugsweise zwischen 75°C und 110°C und die Verweilzeit der Naturfasern in der Vorrichtung beträgt vorzugsweise zwischen 0,5 s und 3 s erfolgen. Dazu wird der Luftstrom mittels eines Gebläses auf eine Geschwindigkeit von 1 m/s bis 6 m/s beschleunigt.

Die Trocknungsparameter während der Trocknung in der zweiten Stufe sind dabei so eingestellt, dass die Naturfasern nach der zweiten Trocknung einen Gehalt an Trockensubstanz von 88 bis 92 Gew.%, höchstens von 95 Gew.% aufweisen. Nach erfolgter Trocknung werden die Naturfasern von der Luft abgetrennt, dies kann beispielsweise durch einen Zyklon erfolgen.

Die nach der zweiten Trocknung entnommenen Naturfasern weisen eine Bauschigkeit von 41 kg/m³ auf. Die Bauschigkeit kann durch ein Schüttgewicht, bzw. durch Bestimmung der Rohdichte quantifiziert werden. Zur Bestimmung der Bauschigkeit werden Naturfasern in einen oben offenen, formstabilen Behälter mit den lichten Maßen 1 m × 1 m × 0,25 m eingeblasen oder manuell eingefüllt und an der Oberkante des Behälters bündig abgestrichen, anschließend wird die Masse der in den Behälter eingefüllten Naturfasern gewogen. Aus der Masse und dem Volumen (0,25 m³) wird die Bauschigkeit berechnet.

Dabei sind Einzelergebnisse und ein Mittelwert aus drei Versuchen anzugeben. Eine erfindungsgemäße Bauschigkeit der Naturfasern beträgt zwischen 30 kg/m³ und 50 kg/m³, vorzugsweise zwischen 35 und 60 kg/m³.

Die mit dem zuvor beschriebenen Verfahren hergestellten Naturfasern werden anschließend verpackt und der weiteren Verwendung zugeführt.

Zur Verwendung als Dämmstoff können die Naturfasern entweder zu Dämmplatten geformt werden oder direkt als Einblasdämmstoff in ein Bauwerk eingebracht werden.

Zur Verwendung als Faserverstärkung für ein Kunststoffmaterial werden die Naturfasern mit Granulat eines Kunststoffs vermischt, wobei das Granulat aufgrund der großen Bauschigkeit in den Poren der Naturfasermatrix verteilt ist. Anschließend werden die mit dem Granulat versehenen Naturfasern einer Vorrichtung zur Agglomeration, hier einem Extruder zugeführt. In dem Extruder werden die mit dem Granulat versehenen Naturfasern komprimiert und erhitzt. Dabei tritt der Rest der in den Naturfasern enthaltenen Feuchtigkeit aus und entweicht aus dem Extruder als Dampf. Durch die Erwärmung der Naturfasern und die Entfernung der Restmengen von Wasser erfolgt eine Aktivierung des Haftvermittlers der durch den direkten Kontakt sowohl mit den Naturfasern als auch mit dem Kunststoff eine fest Bindung mit beiden Stoffen eingeht, so dass die Naturfasern fest in den Kunststoff eingebunden sind. Ferner schmilzt der Kunststoff, wobei die Naturfasern durch die in dem Extruder angeordnete Schnecke gleichmäßig in dem aufgeschmolzenen Kunststoff verteilt werden. Nach dem Aufschmelzen wird das Gemisch aus Naturfasern und Kunststoff durch ein Sieb gepresst an welchem ein Schneidmesser entlang streift. Auf diese Weise bilden sich Pellets eines faserverstärkten Kunststoffmaterials.

Als Ausgangsmaterial des Kunststoffs wird ein thermoplastischer Kunststoff, insbesondere Polypropylen oder Polyethylen eingesetzt, wobei die beiden vorgenannten Kunststoffe auch als Recyclingmaterial ausgebildet sein können.

Die so hergestellten Pellets können mit herkömmlichen Anlagen zur Kunststoffverarbeitung verarbeitet werden, insbesondere können die Pellets in herkömmlichen Spritzgieß- und Extrusionsanlagen verarbeitet werden. Zur Herstellung eines Kunststoffartikels aus faserverstärktem Kunststoff werden die Pellets einer Spritzgieß- oder Extrusionsanlage zugeführt und dort zu Artikeln geformt.

Ein Probekörper bestehend aus einem faserverstärkten Kunststoff, enthaltend 50 Gew.% der erfindungsgemäßen Naturfasern und 50 Gew.% Polypropylen erzielt folgende Werte:

| | |
|---|---|
| Dichte | 0,82 g/cm³ |
| Zugfestigkeit (ISO 527) | 32 MPa |
| Zug-E-Modul (ISO 527) | 4.000 Mpa |
| Charpy-Schlagzähigkeit (ISO 179) | 11 kJ/m² |

Der Schmelzflussindex, als die Kennzahl für das Fließverhalten eines thermoplastischen Werkstoffs, ist im Vergleich zu einem reinen Polypropylen um lediglich 20% erniedrigt. Dies deutet auf eine ähnliche gute Verarbeitbarkeit des faserverstärkten Kunststoffs verglichen zu einem reinen Kunststoff hin. Jedoch verbessern sich die Festigkeitswerte gegenüber reinem Polypropylen signifikant. Sowohl der Zug-E-Modul als auch die Schlagzähigkeit des faserverstärkten Kunststoffs sind wesentlich besser als die Vergleichswerte eines reinen Polypropylens. Die Werte für reines Polypropylen als Neuware betragen:

| | |
|---|---|
| Dichte | 0,9 g/cm³ |
| Zugfestigkeit (ISO 527) | 26 MPa |
| Zug-E-Modul (ISO 527) | 1.450 Mpa |
| Charpy-Schlagzähigkeit (ISO 179) | 5 kJ/m² |

Bezogen auf die Dichte sind die Festigkeitswerte des faserverstärkten Kunststoffs gegenüber reinem Kunststoff deutlich verbessert, so dass aufgrund der besseren Festigkeit eine weitere Gewichtsreduktion und damit Materialeinsparung möglich ist. Somit kann beispielsweise die Wandstärke eines Kunststoffartikels reduziert werden.

Ferner wurde überraschenderweise festgestellt, dass ein Probekörper, welcher aus zermahlenem, also wiederaufbereitetem faserverstärkten Kunststoff der zuvor beschriebenen Art besteht, eine Zugfestigkeit aufweist, die ebenfalls 32 MPa beträgt und sich somit vergleichbar zu einem nicht-aufbereiteten Probekörper verhält. Somit zeigt sich, dass das erfindungsgemäße faserverstärkte Kunststoffmaterial besonders gut für das Recycling geeignet ist.

## Patentansprüche

1. Verfahren zur Bereitstellung und Aufbereitung von Naturfasern, wobei das Verfahren folgende Schritte umfasst:
1) Bereitstellen einer Fasern enthaltenden Biomasse mit einer Trockensubstanz von höchstens 50 Gew.%;
2) Zugeben von Wasser zum Herstellen einer die Biomasse enthaltenden Suspension;
3) Herauslösen der Naturfasern aus der Biomasse;
4) Abtrennen der Flüssigkeit aus der Suspension;
5) wenigstens einmalige Wiederholung von wenigstens einem der Schritte 2) bis 4), wobei bei der letztmaligen Wiederholung von wenigstens einem der Schritte 2) bis 4) die Suspension wenigstens ein Mittel zum Ausrüsten der Fasern enthält;
6) Trocknen der Naturfasern.

2. Verfahren nach Anspruch 1, **dadurch gekennzeichnet, dass** die Trocknung der Fasern in einem mehrstufigen Verfahren erfolgt.

3. Verfahren nach Anspruch 1 oder 2, **dadurch gekennzeichnet, dass** die Trocknung eine Trocknung in einem Bandtrockner umfasst.

4. Verfahren nach einem der Ansprüche 1 bis 3, **dadurch gekennzeichnet**, die Trocknung eine Trocknung in einem Luftstrom umfasst.

5. Verfahren nach einem der Ansprüche 1 bis 4, **dadurch gekennzeichnet, dass** die Mittel einen Haftvermittler, ein Flammschutzmittel, Lichtstabilisatoren und/oder einen Farbstoff umfassen.

6. Verfahren nach Anspruch 5, **dadurch gekennzeichnet, dass** der Haftvermittler ein carboxyliertes Polypropylen umfasst.

7. Verfahren nach Anspruch 6, **dadurch gekennzeichnet, dass** der Haftvermittler Maleinsäureanhydrid enthält.

8. Verfahren nach einem der Ansprüche 1 bis 7, **dadurch gekennzeichnet, dass** die Fasern bis zum Trocknen einen Gehalt an Trockensubstanz von 90% nicht überschreiten, insbesondere einen Gehalt an Trockensubstanz von 60% nicht überschreiten.

9. Verfahren nach einem der Ansprüche 1 bis 8, **dadurch gekennzeichnet, dass** die Fasern enthaltende Biomasse Grasschnitt, Roggengrünschnitt, Bargasse und/oder Treber enthält.

10. Faserverstärktes Kunststoffmaterial, umfassen einen thermoplastischen Kunststoff und Naturfasern erhältlich nach einem Verfahren gemäß der vorherigen Ansprüche.

11. Kunststoffartikel, hergestellt unter Verwendung eines Kunststoffmaterials nach Anspruch 10.

12. Dämmmaterial, umfassend Naturfasern erhältlich nach einem Verfahren gemäß einem der Ansprüche 1 bis 9.

## Claims

1. Method for preparing and processing natural fibers, the method comprising the following steps:
1) preparing a biomass containing fibers and comprising at most 50 % by weight dry matter;
2) adding water to produce a suspension containing the biomass;
3) extracting the natural fibers from the biomass;
4) separating the liquid out from the suspension;
5) repeating at least one of steps 2) to 4) at least once, the suspension containing at least one medium for finishing the fibers during the final repetition of at least one of steps 2) to 4);
6) drying the natural fibers.

2. Method according to claim 1, **characterized in that** the fibers are dried in a multistage method.

3. Method according to either claim 1 or claim 2, **characterized in that** the drying comprises drying in a belt drier.

4. Method according to any of claims 1 to 3, **characterized in that** the drying comprises drying in an airflow.

5. Method according to any of claims 1 to 4, **characterized in that** the media comprise an adhesion promoter, a flame retardant, light stabilizers and/or a dye.

6. Method according to claim 5, **characterized in that** the adhesion promoter comprises a carboxylated polypropylene.

7. Method according to claim 6, **characterized in that** the adhesion promoter contains maleic anhydride.

8. Method according to any of claims 1 to 7, **characterized in that**, until drying, the fibers do not exceed a dry matter content of 90 %, in particular do not exceed a dry matter content of 60 %.

9. Method according to any of claims 1 to 8, **characterized in that** the biomass containing fibers contains grass cuttings, green rye cuttings, bagasse and/or draff.

10. Fiber-reinforced plastic material, comprising a thermoplastic plastic material and natural fibers obtainable by a method according to the preceding claims.

11. Plastic material article, manufactured using a plastic material according to claim 10.

12. Insulating material, comprising natural fibers obtainable by a method according to any of claims 1 to 9.

## Revendications

1. Procédé d'obtention et de préparation de fibres naturelles, où le procédé comprend les étapes suivantes:
1) obtention d'une biomasse contenant des fibres avec une teneur en matière sèche d'au plus 50 % en poids;
2) ajout d'eau pour la réalisation d'une suspension contenant la biomasse;
3) extraction des fibres naturelles de la biomasse;
4) séparation du liquide à partir de la suspension ;
5) au moins une fois, répétition d'au moins l'une des étapes 2) à 4), où, lors de la dernière répétition d'au moins l'une des étapes 2) à 4), la suspension contient au moins un produit pour l'apprêtage des fibres;
6) séchage des fibres naturelles.

2. Procédé selon la revendication 1, **caractérisé en ce que** le séchage es fibres est effectué dans un procédé à plusieurs niveaux.

3. Procédé selon la revendication 1 ou 2, **caractérisé en ce que** le séchage comprend un séchage dans un séchoir à bande.

4. Procédé selon l'une des revendications 1 à 3, **caractérisé en ce que** le séchage comprend un séchage dans un courant d'air.

5. Procédé selon l'une des revendications 1 à 4, **caractérisé en ce que** les produits comprennent un agent promoteur d'adhésion, un agent retardateur de flamme, des agents de stabilisation à la lumière et/ou un colorant.

6. Procédé selon la revendication 5, **caractérisé en ce que** l'agent promoteur d'adhésion comprend un polypropylène carboxylé.

7. Procédé selon la revendication 6, **caractérisé en ce que** l'agent promoteur d'adhésion contient de l'anhydride d'acide maléique.

8. Procédé selon l'une des revendications 1 à 7, **caractérisé en ce que** les fibres ne dépassent pas une teneur en matière sèche de 90 % jusqu'au séchage, notamment une teneur en matière sèche de 60 %.

9. Procédé selon l'une des revendications 1 à 8, **caractérisé en ce que** la biomasse contenant des fibres contient de l'herbe de tonte, du seigle vert tondu, de la bagasse et/ou de la drêche.

10. Matériau synthétique renforcé de fibres, comprenant une matière synthétique thermoplastique et des fibres naturelles pouvant être obtenues d'après un procédé selon les revendications précédentes.

11. Article en matière synthétique fabriqué, moyennant l'utilisation d'un matériau synthétique selon la revendication 10.

12. Matériau d'isolation comprenant des fibres naturelles pouvant être obtenues d'après un procédé selon l'une des revendications 1 à 9.
